# FASCICULE DE BREVET EUROPEEN

(11) **EP 3 051 196 B1**
(45) Date de publication et mention de la délivrance du brevet: **18.09.2019**
(21) Numéro de dépôt: 16153478.9
(22) Date de dépôt: 29.01.2016
(51) Int. Cl.: F16L 13/14, F16J 15/06

(54) **JOINT ETANCHE UNIQUEMENT APRES SERTISSAGE**
DICHTUNG, DIE ERST NACH VERPRESSUNG DICHT WIRD
SEAL WHICH IS ONLY TIGHT AFTER CRIMPING

(30) Priorité: 02.02.2015 FR 1550774
(43) Date de publication de la demande: 03.08.2016
(73) Titulaire: LE JOINT FRANÇAIS SNC, 75008 Paris (FR)
(72) Inventeur: DUVAL-ARNOULD, Ludovic, 53200 CHATEAU-GONTIER (FR)
(74) Mandataire: Gevers & Orès

(56) Documents cités:
- EP-A1- 1 249 655
- EP-A1- 2 628 989
- EP-A2- 2 151 616
- US-A1- 2014 084 018

## Description

L'invention se situe dans le domaine des joints d'étanchéité pour des raccords, particulièrement dans l'adduction d'eau potable ou non.

Le circuit d'adduction d'eau d'un bâtiment est généralement constitué de canalisations raccordées entre elles au moyen de raccords à presser munis de joints en caoutchoucs. Un raccord à presser est un raccord comportant une gorge dans laquelle se trouve un joint, installé pour constituer un réseau, puis déformé par pressage au moyen d'une pince adaptée pour effectuer un sertissage et rendre le raccord indémontable avant la mise sous pression d'eau. Le réseau peut être réalisé en canalisations de métal tel que le cuivre, en PE réticulé ou non, monocouche ou multicouche, éventuellement avec couche métallique... Un tel assemblage consiste donc à insérer une canalisation soit autour du raccord, soit à l'intérieur du raccord. Dans premier cas, la gorge est tournée vers l'extérieur du raccord et le joint est donc monté, dans la gorge, sur son diamètre intérieur sur le raccord. Dans le second cas, la gorge est tournée vers l'intérieur du raccord et le joint est monté sur son diamètre extérieur dans le raccord.

La plupart des raccords sont conçus pour être étanches dès l'assemblage, c'est-à-dire avant le sertissage. Or un bâtiment de plusieurs étages peut contenir des centaines voire des milliers de raccords et il peut arriver que les installateurs oublient de sertir un raccord. Même s'il est initialement étanche, un raccord non serti résiste mal à la pression et peut se déboiter, engendrant un dégât des eaux qui peut être très pénalisant pour le chantier ou pour le bâtiment en service, ces raccords étant souvent placés dans les murs ou les cloisons et donc inaccessibles.

Il existe des solutions permettant de rendre fuyant un raccord qui n'est pas serti, permettant une action de test avant la mise en service en vue de découvrir d'éventuels raccords non sertis (systèmes« Leak Before Press » ou LBP) : on met le réseau sous pression d'air et une baisse de pression indique la présence d'un ou plusieurs raccords non sertis. Si l'installation le permet, on peut aussi mettre le circuit sous pression d'eau et chercher si une fuite se déclare.

Ces solutions soit sont visuelles (le raccord comporte un anneau en plastique qui est détruit par l'action de sertissage), soit agissent grâce à une géométrie particulière du raccord (le raccord comporte des creux dans la gorge, qui sont écrasés lors du sertissage), soit reposent sur une géométrie particulière du joint.

Une des solutions connues consiste à proposer des joints qui présentent une réduction locale de la section du joint, torique ou de forme spéciale (ovale, à lèvre, en forme de triangle...), rendant le joint non étanche tant que le joint n'est pas serti, par absence d'écrasement de ladite section et donc de contact. La réduction de la section est parfois entourée de renflements ou de boursouflures pour accentuer l'effet de perte de contact. Un inconvénient de cette solution par réduction locale de la section réside dans le fait qu'une fois le raccord serti, l'étanchéité est réalisée aux endroits des réductions par une section réduite, elle est donc beaucoup moins robuste et pérenne.

Une autre solution consiste à créer une augmentation locale de la section du joint. Dans ce cas, cette surépaisseur créé la fuite sur ses cotés avant pressage.

Du document EP 2 628 989 connaît un joint annulaire LBP comportant une série de picots sur son diamètre extérieur, destinés à se placer au fond d'une gorge de raccord. Ces picots sont insuffisants pour maintenir la surface du joint écartée du fond de la gorge et garantir des passages pour la fuite du fluide. En pratique, le joint, même non comprimé, va occuper le fond de la gorge là où il ne se trouve pas de picot, c'est-à-dire sur la majorité de la surface du joint. Les fuites vont se produire autour des picots seulement et de façon non maîtrisée. Ce joint ne procure pas de canal de fuite bien individualisé.

Du document EP 2 151 616 on connaît un joint annulaire LBP comportant sur son diamètre intérieur un rebord interrompu par une série de fentes, ce rebord étant suffisamment étendu dans le sens radial pour qu'il donne prise à une canalisation lors de son insertion dans le raccord et entraîne le joint en rotation sur lui-même. En utilisation, ce type de rebord est nécessairement à l'opposé du fond de la gorge. Cette forme de joint peut être à l'origine de problèmes : elle suppose pour fonctionner que le joint est capable de tourner dans la gorge dans laquelle il est inséré. Or, compte tenu des tolérances dans les dimensions du raccord et de la canalisation ainsi que d'un éventuel désalignement, il n'est pas possible de garantir que le joint va entièrement tourner dans la gorge. S'il ne tourne pas ou incomplètement, le rebord, relativement volumineux, ne va pas s'effacer lors du sertissage et le joint risque de fuir après sertissage. De plus, si le joint ne tourne pas, le rebord risque d'être endommagé par la canalisation lors de son insertion.

L'invention vise à résoudre ces difficultés. A cet effet elle propose un joint annulaire en matériau déformable élastiquement selon la revendication 1.

Le bourrelet peut se trouver sur le diamètre extérieur ou sur le diamètre intérieur du joint ou, dans une variante, sur les deux diamètres ; dans ce dernier cas, les segments de bourrelet et les discontinuités peuvent être en vis-à-vis ou pas. Il est destiné à écarter la surface du joint de celle de la première ou de la seconde canalisation et à créer des fuites tant que le joint n'est pas serti. Comme ce bourrelet comporte des segments séparés par des discontinuités, ces dernières créent des canaux de fuite bien individualisés avant sertissage de l'assemblage. Les segments de bourrelet occupent une part substantielle de la circonférence sur laquelle il se trouve.

Lors du montage du joint, le bourrelet peut se trouver soit au fond de la gorge de la seconde canalisation, soit tourné vers l'extérieur, il n'est pas spécialisé quant au sens d'assemblage ; de plus, il peut être monté soit sur son diamètre intérieur soit sur son diamètre extérieur, et ceci indépendamment de la position, intérieure ou extérieure, du bourrelet. Il s'agit d'un joint LBP universel.

La seconde canalisation est avantageusement un raccord à sertir.

Dans le cas d'un joint torique à section circulaire, la dimension transversale d'une section du joint mesurée dans le plan de joint correspond au diamètre du tore. Dans le cas le plus général, la hauteur du bourrelet est définie comme étant la plus grande épaisseur du bourrelet entre la surface du joint et celle du bourrelet.

Qu'il soit monté sur son diamètre intérieur ou sur son diamètre extérieur, le bourrelet peut se trouver à l'opposé du creux de la gorge dans laquelle il est installé. Dans cette position, la première canalisation va frotter contre le joint lors de son insertion soit autour, soit dans le raccord. Il convient donc que le bourrelet ne soit pas trop saillant par rapport à la surface du joint pour offrir le moins de résistance à l'insertion de la première canalisation.

La section du bourrelet forme une lunule, c'est-à-dire une portion de surface délimitée par deux cercles non concentriques de rayons différents, formant un croissant de lune. La portion de cercle du côté concave de la lunule est celle de la surface du joint, la portion du côté convexe formant la surface du bourrelet proprement dit. La hauteur du bourrelet est définie comme étant la plus grande distance entre les deux cercles mesurée le long de la droite passant par les centres des deux cercles.

Cette forme du bourrelet permet d'offrir une moindre résistance du joint à l'insertion de la première canalisation et ainsi d'éviter que le joint tourne sur lui-même à l'intérieur de la gorge, dans le cas ou le bourrelet est amené à frotter contre la première canalisation.

Selon l'invention, l'angle au centre de l'emprise de la lunule sur la surface du joint dans le plan d'une section orthogonale au plan de joint est compris entre 30° et 60°.

Cette fourchette de valeurs contribue à créer des canaux de fuite bien individualisés entre les segments du bourrelet.

Avantageusement, le bourrelet peut comporter entre un et 10 segments.

Avantageusement, une section transversale du joint peut comporter en outre au moins une partie sensiblement rectiligne et/ou une partie concave.

Dans cette réalisation, une section transversale du joint n'est pas entièrement circulaire. Elle comporte au moins une partie sensiblement rectiligne qui contribue à empêcher le joint de tourner sur lui-même dans la gorge lors de l'assemblage. Dans ce cas, la partie rectiligne du joint est, en utilisation, localisée dans la gorge Elle peut aussi comporter une partie concave, associée ou non à deux excroissances.

L'invention porte également sur un assemblage d'une première et d'une seconde canalisations, la seconde canalisation comportant une gorge annulaire comprenant un joint selon l'invention.

L'invention porte également sur un moule de fabrication d'un joint en matériau déformable élastiquement selon l'invention caractérisé en ce que le moule comprend au moins une première et une deuxième matrice, mobiles l'une par rapport à l'autre, comportant chacune une concavité, lesdites concavités étant conformées de façon que, lorsque les moules sont rapprochés de façon à mettre lesdites concavités en regard l'une de l'autre, elles définissent une cavité qui reproduit en creux la forme dudit joint.

L'invention porte également sur un procédé de réalisation d'un assemblage étanche entre une première et une seconde canalisations, la seconde canalisation comportant une gorge annulaire destinée à recevoir un joint, caractérisé en ce qu'il comporte au moins les étapes suivantes :
- Mettre en place un joint selon l'invention dans ladite gorge,
- Assembler la première et la seconde canalisations,
- Mettre l'assemblage sous pression de fluide de façon à vérifier qu'il ne fuie pas,
- Sertir.

Des modes de réalisation et des variantes seront décrits ci-après, à titre d'exemples non limitatifs, avec référence aux dessins annexés dans lesquels :
La figure 1 représente une coupe selon le plan de symétrie du premier mode de réalisation du joint,
La figure 2 représente une section transversale selon A-A du premier mode de réalisation du joint, la figure 2A étant une vue agrandie d'une portion de la figure 1,
La figure 3 représente une section transversale selon B-B du premier mode de réalisation du joint,
La figure 4 représente une section transversale d'un deuxième mode de réalisation du joint selon l'invention,
Les figures 5A et 5B représentent les sections transversales de deux variantes du joint,
Les figures 6A, 6B, 6C et 6D illustrent des applications du joint selon l'invention.

Dans tout le texte on appelle section transversale du joint, une section par un plan orthogonal au plan de joint P et passant par l'axe X-X' de révolution du joint. La surface de ce joint est notée S. Les joints sont habituellement symétriques par rapport à ce plan de joint P de façon à ne pas imposer un sens de montage.

L'intersection de la surface S du tore et du plan P forme deux courbes. On appelle diamètre extérieur la courbe S₁ la plus éloignée de l'axe X-X' et diamètre intérieur S₂ la courbe la plus proche de l'axe X-X'.

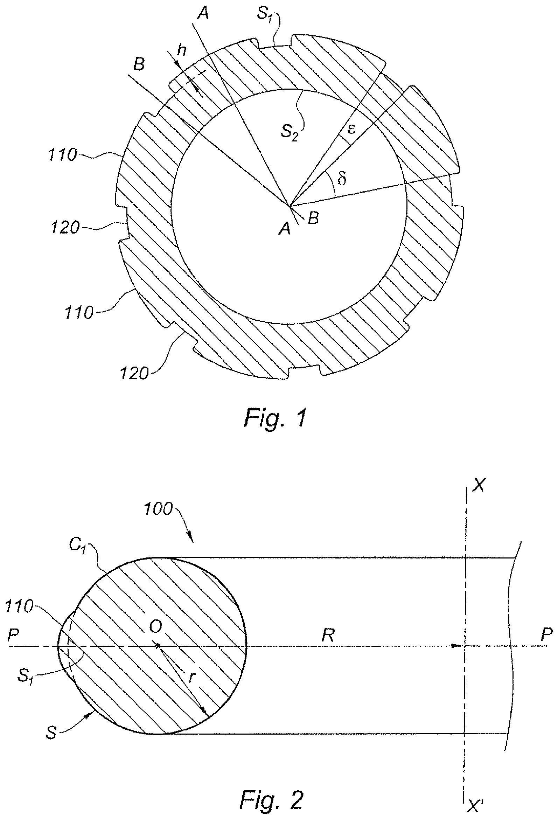

La figure 1 illustre une section d'un premier mode de réalisation d'un joint torique ouvert 100 selon son plan P de symétrie. Cette section est délimitée par deux courbes S₁ et S₂ qui sont respectivement les diamètres extérieur et intérieur du joint. Le diamètre intérieur S₂ forme un cercle. Le diamètre extérieur S₁ forme un cercle au-dessus duquel s'élèvent huit segments 110 de même dimension, séparés par huit canaux 120 également de même dimension, qui sont la trace dans le plan P d'un bourrelet discontinu. Dans l'exemple illustré, l'angle au centre ε des canaux est égal à 5° ; en conséquence l'angle au centre δ des segments de bourrelet 110 est égal à 40°. Les segments de bourrelet 110 ont une hauteur h au-dessus du diamètre extérieur S₁, égale dans l'exemple illustré à 0,1 mm.

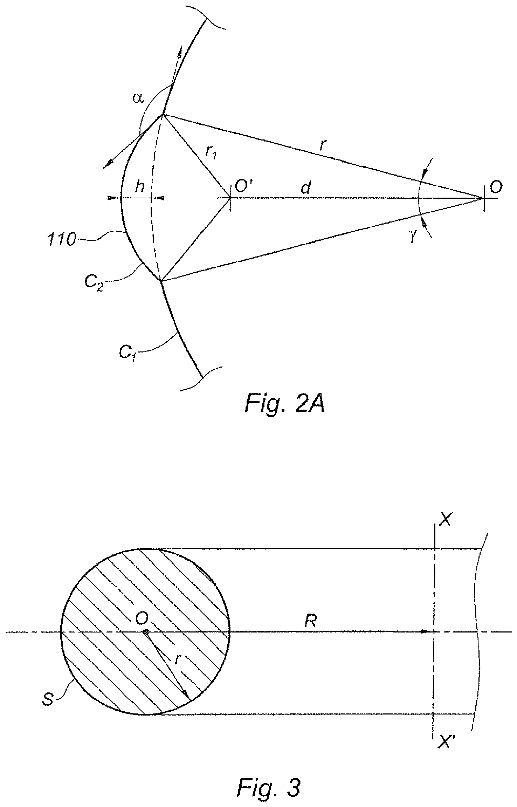

Les figures 2 et 2A illustrent la section transversale selon A-A du joint 100 de section circulaire. Ce joint est formé par la révolution de rayon R autour d'un axe X-X' d'un cercle C₁ de centre O et de rayon r, tel que R > r. Son plan de symétrie P est orthogonal à l'axe X-X'. Dans l'exemple illustré, le diamètre du tore 2^{∗}r est égal à 1 mm.

Cette section fait apparaître un bourrelet 110 qui s'élève d'une hauteur h au-dessus de la surface S du joint, le long du diamètre extérieur S₁. La section transversale du bourrelet 110 prend la forme d'une lunule, délimitée par deux segments de cercles non concentriques, en l'espèce un premier segment du cercle C₁ et un second segment de cercle C₂ de centre O' situé à une distance d du centre O, et de rayon r₁ < r. L'angle au centre de l'emprise de la lunule sur la section du joint, angle γ, vaut 39°.

La hauteur h de la lunule doit être suffisante pour que des fuites se produisent dans les canaux 120 avant sertissage, mais pas excessive pour que les segments de bourrelet s'effacent bien par élasticité après sertissage. Dans le cas illustré, le rapport entre la hauteur de la lunule et le diamètre de la section circulaire du joint est égal à 0,1/1 = 10 %. De façon plus générale, il a été établi que le rapport h/2^{∗}r est de préférence compris entre 10 % et 20 %.

Ces valeurs de γ et du rapport h/2^{∗}r garantissent que l'angle α entre les tangentes aux segments de cercles C₁ et C₂ à leur intersection soit suffisamment ouvert pour que les segments de bourrelet 110 ne créent pas un obstacle à l'insertion d'une canalisation lorsque le joint se trouve dans la gorge d'un raccord.

La figure 3 illustre la section transversale selon B-B du joint 100. Etant prise à l'emplacement d'un canal 120, cette section est circulaire.

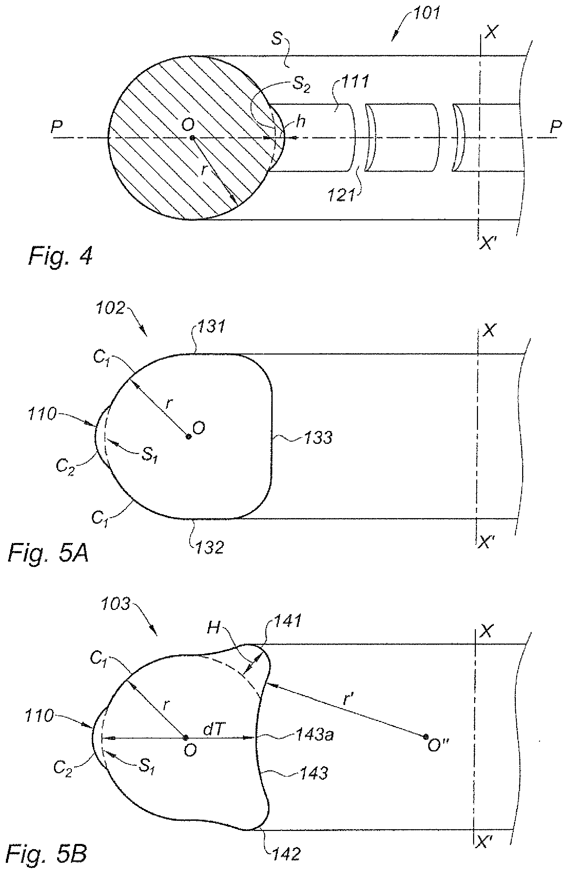

La figure 4 illustre une section transversale d'un autre mode de réalisation du joint 101. Dans ce mode de réalisation, les segments de bourrelet 111 et les canaux 121 se trouvent sur le diamètre intérieur S₂ du joint 101 ; la section des segments de bourrelet 111 est en forme de lunule. Les valeurs précédemment évoquées pour les angles ε, δ et γ, ainsi que pour le rapport h/2^{∗}r restent valables.

La figure 5A illustre la section transversale d'une variante de joint 102 comportant :
- Comme précédemment, un premier segment de cercle C₁ de centre O et de rayon r, au-dessus duquel s'élève une lunule 110 formée par un second segment de cercle C₂ du côté du diamètre extérieur S₁ du joint,
- Trois parties sensiblement rectilignes 133 et 131, 132 respectivement du côté du diamètre intérieur et de part et d'autre du plan de symétrie du joint.

Par sensiblement rectilignes on entend que ces parties de courbe ont un rayon de courbure nettement plus grand que le rayon r du premier segment de cercle C₁, par exemple au moins 10 fois plus grand, de façon concave ou convexe.

Ces parties sensiblement rectilignes 131, 132, 133 sont destinées à bloquer en rotation le joint 102 à l'intérieur de la gorge 310 du raccord 300.

La figure 5B illustre la section transversale d'une autre variante de joint 103 comportant :
- Comme précédemment, un premier segment de cercle C₁ de centre O et de rayon r, au-dessus duquel s'élève une lunule 110 formée par un second segment de cercle C₂ du côté du diamètre extérieur S₁ du joint,
- A l'opposé de la lunule 110, du côté du diamètre intérieur, une partie concave 143, c'est-à-dire dont le rayon de courbure r' de centre O" est tourné vers l'axe X-X' du joint 103 ; le rayon de courbure r' est, dans l'exemple illustré, supérieur au rayon r du premier segment de cercle C₁ et inférieur au rayon R de révolution du joint,
- Le premier segment de cercle C₁ et la partie concave 143 étant reliés, de chaque côté du plan P de symétrie du joint, par une excroissance 141, 142 qui s'élève d'une hauteur H par rapport au premier segment de cercle C₁, cette hauteur H étant nettement supérieure à la hauteur h de la lunule, par exemple 10 fois supérieure.

Ces excroissances 141, 142 ont, comme précédemment, pour fonction de bloquer en rotation le joint 103 à l'intérieur de la gorge du raccord. Dans cette variante, le bourrelet 110 ne peut bien entendu se situer que sur le diamètre extérieur S₁ du joint.

A titre d'illustration, la dimension transversale du joint 103 est la distance dT entre la trace du diamètre extérieur S₁ et le point 143a de la face concave 143 qui est le plus proche du centre O du premier segment de cercle C₁.

Les deux précédentes variantes peuvent se combiner ; par exemple la partie rectiligne 133 de la figure 5A pourrait être concave comme il est représenté sur la figure 5B et non rectiligne. De même, la variante de la figure 5A pourrait comporter des excroissances de part et d'autre de la partie sensiblement rectiligne 133 située du côté du diamètre intérieur.

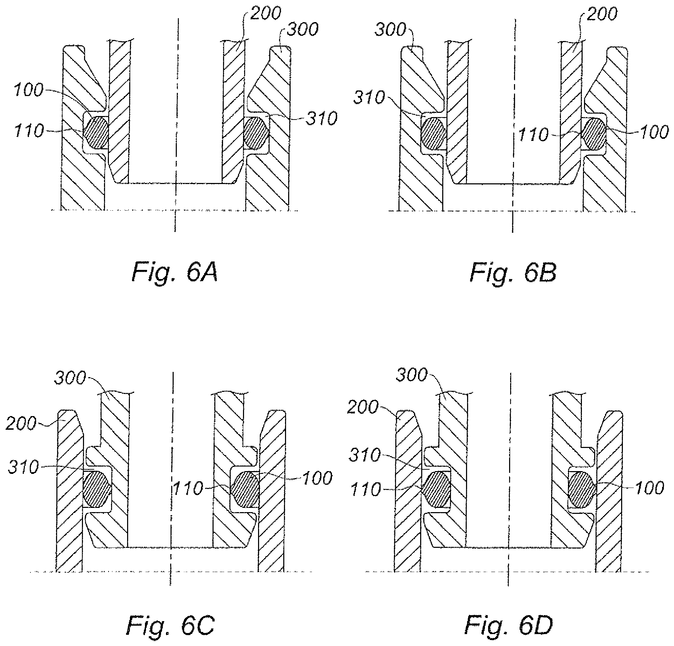

Les figures 6A à 6D illustrent des applications du joint selon l'invention dans l'assemblage d'une canalisation 200 et d'un raccord 300, avant sertissage ; le raccord est muni d'une gorge 310 dans laquelle un joint 100 a pris place.

Dans les figures 6A et 6B, la canalisation 200 est insérée à l'intérieur du raccord 300, le joint 100 est en conséquence monté dans la gorge 310 sur son diamètre extérieur. Dans la figure 6A, le bourrelet 110 est situé sur le diamètre extérieur du joint, et donc au fond de la gorge 310 en utilisation, dans la figure 6B, le bourrelet 110 est situé sur le diamètre intérieur du joint.

Dans les figures 6C et 6D, c'est le raccord 300 qui est inséré à l'intérieur de la canalisation 200, le joint 100 est en conséquence monté dans la gorge 310 sur son diamètre intérieur. Dans la figure 6C, le bourrelet 110 est situé sur le diamètre intérieur du joint, et donc au fond de la gorge 310 en utilisation, dans la figure 6D, le bourrelet 110 est situé sur le diamètre extérieur du joint.

Avant sertissage, le bourrelet 110 n'est pas écrasé, en conséquence les canaux 120 entre les segments de bourrelet garantissent que le joint n'est pas étanche. Après sertissage, le bourrelet 110 est écrasé et le joint 100 est étanche. Bien entendu, le joint illustré dans les figures 6A à 6D pourrait être l'une des variantes décrites précédemment, sauf en ce qui concerne la variante de joint 103, obligatoirement monté sur son diamètre intérieur.

L'invention n'est pas limitée par la description qui précède. En particulier :
- La section transversale du joint pourrait ne pas être circulaire, mais par exemple elliptique, polyédrique, mais, en tout cas, selon la revendication 1, une section transversale du joint comporte au moins un premier segment de cercle.
- Le joint pourrait être dissymétrique par rapport à un plan de joint,
- Les différents segments de bourrelet pourraient être d'angles au centre différents deux à deux, de même que les discontinuités,
- Les dimensions indiquées pour le joint ne sont pas limitatives, ainsi l'invention peut concerner des joints dont de diamètre du tore 2^{∗}r est par exemple compris entre 1 mm et 5 mm, et le rayon de révolution R est compris entre 2 à 32 mm.

## Revendications

1. Joint annulaire (100, 101, 102, 103) en matériau déformable élastiquement, destiné à assurer un assemblage étanche entre une première (200) et une seconde (300) canalisations après sertissage, la seconde canalisation comportant une gorge annulaire (310) destinée à recevoir le joint, ledit joint comportant un plan de joint (P) à mi-épaisseur et un axe de révolution (X-X') perpendiculaire audit plan de joint, ledit joint comportant, à une intersection de la surface (S) du joint et dudit plan de joint, un bourrelet (110, 111) qui s'étend radialement avec une hauteur h au-dessus de la surface (S) du joint, le long du diamètre extérieur (S₁) dudit joint et formé de segments, lesdits segments étant séparés par des discontinuités (120, 121) formant canaux de fuite avant sertissage, une section transversale du joint (100, 101, 102, 103), comportant au moins un premier segment de cercle (C₁) de centre 0 et de diamètre 2*r, la section des segments de bourrelet (110, 111) formant une lunule délimitée par une portion du premier segment du cercle et un second segment de cercle (C₂) qui s'étend au-dessus dudit premier segment de cercle, le rapport h/(2*r) étant compris entre 10% et 20%, **caractérisé en ce que** l'angle (γ) au centre O de l'emprise de la lunule sur la surface (S) du joint dans le plan d'une section orthogonale au plan de joint est compris entre 30° et 60°.

2. Joint selon la revendication 1, **caractérisé en ce que** l'angle au centre de chaque discontinuité (120, 121) dans le plan du joint est compris entre 5° et 15°.

3. Joint selon l'une des revendications précédentes, **caractérisé en ce qu'**une section transversale du joint (102, 103) comporte en outre au moins une partie sensiblement rectiligne (131, 132, 133) et/ou une partie concave (143).

4. Assemblage d'une première (200) et d'une seconde (300) canalisations, la seconde canalisation comportant une gorge annulaire (310) comprenant un joint (100, 101, 102, 103) selon l'une des revendications précédentes.

5. Moule de fabrication d'un joint (100, 101, 102, 103) selon l'une des revendications 1 à 3, **caractérisé en ce que** le moule comprend au moins une première et une deuxième matrice, mobiles l'une par rapport à l'autre, comportant chacune une concavité, lesdites concavités étant conformées de façon que, lorsque les moules sont rapprochés de façon à mettre lesdites concavités en regard l'une de l'autre, elles définissent une cavité qui reproduit en creux la forme dudit joint.

6. Procédé de réalisation d'un assemblage étanche entre une première (200) et une seconde (300) canalisations, la seconde canalisation comportant une gorge annulaire (310) destinée à recevoir un joint (100, 101, 102, 103), **caractérisé en ce qu'**il comporte au moins les étapes suivantes :
- Mettre en place un joint (100, 101, 102, 103) selon l'une des revendications 1 à 3 dans ladite gorge,
- Assembler la première et la seconde canalisations,
- Mettre l'assemblage sous pression de fluide de façon à vérifier qu'il ne fuie pas,
- Sertir.

## Patentansprüche

1. Ringförmige Dichtung (100, 101, 102, 103) aus elastisch verformbarem Material, die dazu vorgesehen ist, für eine dichte Zusammensetzung zwischen einer ersten (200) und einer zweiten (300) Rohrleitung nach Verpressung zu sorgen, wobei die zweite Rohrleitung eine ringförmige Nut (310) beinhaltet, die dazu vorgesehen ist, die Dichtung aufzunehmen, wobei die Dichtung eine Dichtungsebene (P) mit halber Dicke und eine Drehachse (X-X') senkrecht zur Dichtungsebene beinhaltet, wobei die Dichtung an einer Schnittstelle der Oberfläche (S) der Dichtung und der Dichtungsebene einen Wulst (110, 111) beinhaltet, der sich radial mit einer Höhe h über der Oberfläche (S) der Dichtung entlang des Außendurchmessers (S₁) der Dichtung erstreckt und aus Segmenten gebildet ist, wobei die Segmente durch Diskontinuitäten (120, 121) getrennt sind, die Ablaufkanäle vor Verpressung bilden, wobei ein Querschnitt der Dichtung (100, 101, 102, 103) mindestens ein erstes Kreissegment (C₁) mit Mittelpunkt O und mit Durchmesser 2*r beinhaltet, wobei der Schnitt der Wulstsegmente (110, 111) einen von einem Abschnitt des ersten Kreissegments eingegrenzten Möndchen und ein zweites Kreissegment (C₂) bildet, das sich über dem ersten Kreissegment erstreckt, wobei das Verhältnis h / (2*r) zwischen 10 % und 20 % beträgt, **dadurch gekennzeichnet, dass** der Winkel (γ) im Mittelpunkt O der Grundfläche des Möndchen auf der Oberfläche (S) der Dichtung in der Ebene eines senkrecht zur Dichtungsebene liegenden Schnitts zwischen 30° und 60° beträgt.

2. Dichtung nach Anspruch 1, **dadurch gekennzeichnet, dass** der Winkel im Mittelpunkt jeder Diskontinuität (120, 121) in der Dichtungsebene zwischen 5° und 15° beträgt.

3. Dichtung nach einem der vorstehenden Ansprüche, **dadurch gekennzeichnet, dass** ein Querschnitt der Dichtung (102, 103) weiter mindestens einen im Wesentlichen geradlinigen Teil (131, 132, 133) und/oder einen konkaven Teil (143) beinhaltet.

4. Zusammensetzung einer ersten (200) und einer zweiten (300) Rohrleitung, wobei die zweite Rohrleitung eine ringförmige Nut (310), umfassend eine Dichtung (100, 101, 102, 103) nach einem der vorstehenden Ansprüche, beinhaltet.

5. Form zur Herstellung einer Dichtung (100, 101, 102, 103) nach einem der Ansprüche 1 bis 3, **dadurch gekennzeichnet, dass** die Form mindestens eine erste und eine zweite Matrize umfasst, die beweglich zueinander sind, die jeweils eine Konkavität beinhalten, wobei die Konkavitäten übereinstimmen, sodass, wenn die Formen aneinander angenähert werden, sodass die Konkavitäten einander zugewandt sind, sie einen Hohlraum definieren, der die Form der Dichtung hohl reproduziert.

6. Verfahren zur Realisation einer dichten Zusammensetzung zwischen einer ersten (200) und einer zweiten (300) Rohrleitung, wobei die zweite Rohrleitung eine ringförmige Nut (310) beinhaltet, die dazu vorgesehen ist, eine Dichtung (100, 101, 102, 103) aufzunehmen, **dadurch gekennzeichnet, dass** es mindestens die folgenden Schritte beinhaltet:
- Einsetzen einer Dichtung (100, 101, 102, 103) nach einem der Ansprüche 1 bis 3 in die Nut,
- Zusammensetzen der ersten und der zweiten Rohrleitung,
- Setzen der Zusammensetzung unter Fluiddruck, um zu überprüfen, dass sie nicht leckt,
- Verpressen.

## Claims

1. Annular seal (100, 101, 102, 103) made from an elastically deformable material, intended to provide a sealed assembly between a first pipe (200) and a second (300) pipe after crimping, the second pipe comprising an annular groove (310) intended to receive the seal, said seal comprising a seal plane (P) at mid thickness and an axis of revolution (X-X') perpendicular to said seal plane, said seal comprising, at an intersection of the surface (S) of said seal and of said seal plane, a bulge (110, 111) that extends radially with a height h above the surface (S) of the seal, along the outer diameter (S₁) of said seal and formed from segments, said segments being separated by discontinuities (120, 121) forming outlet channels before crimping, a transversal section of the seal (100, 101, 102, 103), comprising at least one first circle segment (C₁) of centre O and diameter 2*r, the section of the bulge segments (110, 111) forming a lunula delimited by a portion of the first segment of the circle and a second circle segment (C₂) which extends above said first circle segment, the ratio h/(2*r) being between 10 % and 20 %, **characterised in that** the angle (γ) at the centre of the grip of the lunula on the surface (S) of the seal in the plane of a section orthogonal to the seal plane is between 30° and 60°.

2. Seal according to claim 1, **characterised in that** the angle at the centre of each discontinuity (120, 121) in the plane of the seal is between 5° and 15°.

3. Seal according to one of the preceding claims, **characterised in that** a transversal section of the seal (102, 103) further comprises at least one substantially straight portion (131, 132, 133) and/or a concave portion (143).

4. Assembly of a first pipe (200) and of a second (300) pipe, the second pipe comprising an annular groove (310) comprising a seal (100, 101, 102, 103) according to one of the preceding claims.

5. Mould for manufacturing a seal (100, 101, 102, 103) according to one of claims 1 to 3, **characterised in that** the mould comprises at least one first and one second die, movable in relation to one another, each comprising a concavity, said concavities being shaped in such a way that, when the moulds are brought close together in such a way as to place said concavities facing one another, they define a cavity that reproduces as a hollow the shape of said seal.

6. Method for producing a sealed assembly between a first pipe (200) and a second (300) pipe, the second pipe comprising an annular groove (310) intended to receive a seal (100, 101, 102, 103), **characterised in that** it comprises at least the following steps:
- Setting in place a seal (100, 101, 102, 103) according to one of claims 1 to 3 in said groove,
- Assembling the first pipe and the second pipe,
- Placing the assembly under fluid pressure so as to check that it does not leak,
- Crimping.
